# EUROPÄISCHE PATENTSCHRIFT

(11) **EP 3 224 929 B1**
(45) Veröffentlichungstag und Bekanntmachung des Hinweises auf die Patenterteilung: **10.04.2019**
(21) Anmeldenummer: 15766771.8
(22) Anmeldetag: 09.09.2015
(51) Int. Cl.: H02K 3/18, H02K 11/00

(54) **PERMANENTERREGTE SYNCHRONMASCHINE UND KRAFTFAHRZEUGSYSTEM**
PERMANENT-MAGNET SYNCHRONOUS MACHINE AND MOTOR VEHICLE SYSTEM
MACHINE SYNCHRONE À EXCITATION PERMANENTE ET SYSTÈME POUR VÉHICULE AUTOMOBILE

(30) Priorität: 28.11.2014 DE 102014224432
(43) Veröffentlichungstag der Anmeldung: 04.10.2017
(73) Patentinhaber: Continental Teves AG & Co. OHG, 60488 Frankfurt am Main (DE)
(72) Erfinder: STAUDER, Peter, 55128 Mainz (DE); HOCHHEIM, Mathias, 35418 Buseck (DE); SAUERWALD, Timo, 35745 Herborn (DE)
(86) Internationale Anmeldenummer: PCT/EP2015/070585
(87) Internationale Veröffentlichungsnummer: WO 2016/082951

(56) Entgegenhaltungen:
- WO-A1-84/03400
- DE-A1- 19 961 760
- DE-A1-102013 208 570
- JP-A- H0 974 701
- US-A- 2 825 828
- US-A- 4 296 344
- US-A1- 2014 103 850

## Beschreibung

Die Erfindung betrifft eine permanenterregte Synchronmaschine mit einem Rotor und Stator gemäß dem Oberbegriff des Patentanspruchs 1 sowie ein Kraftfahrzeugsystem.

Ein Kraftfahrzeugsystem, beispielsweise ein Brems- oder Lenksystem, welches für automatisiertes Fahren geeignet sein soll, bedarf einer redundanten Energieversorgung, also eine Energieversorgung mittels zweier Bordnetze, damit eine Funktion eines Systems oder mehrerer Systeme auch beim Auftreten von Störungen bzw. Ausfällen sichergestellt werden kann (funktionale Sicherheit). Ebenso wird eine interne Redundanz bezüglich der Aktorik und der Leistungselektronik gefordert.

Aus der DE 199 60 611 A1 ist eine elektromechanische Bremsanlage mit einem gattungsbildenden bürstenlosen Gleichstrommotor für zwei unabhängige Bordnetze mit der gleichen Spannungslage von zweimal 12 V bekannt, bei welchem die Statorwicklung wenigstens in zwei getrennte Wicklungen mit jeweils gleicher Windungszahl unterteilt ist, so dass jeder Teil der Statorwicklung über jeweils eine Leistungselektronik mit jeweils einer dieser Bordnetze verbunden werden kann. Durch eine solche Unterteilung der Statorwicklung entsprechend der Anzahl der unabhängigen Bordnetze eines Fahrzeugs werden in der permanenterregten Synchronmaschine mehrere voneinander unabhängige Halbmotoren realisiert, so dass bei Ausfall eines der beiden Bordnetze ein Halbmotor, bei verminderter Ausgangsleistung, mit dem anderen Bordnetz weiterbetrieben werden kann.

Ein solcher bürstenloser Gleichstrommotor gemäß dieser DE 199 60 611 A1 wird die Unterteilung der Statorwicklung durch Abgriffe an der durchgehenden Wicklung realisiert, wobei dann allerdings die Spannungsversorgungen auf unterschiedlichen Niveaus arbeiten müssen. Aufgrund der fehlenden mechanischen Trennung der den beiden Bordnetzen zugehörigen Spulenwicklungen sind jedoch die Ansteuerung betreffende Fehlermöglichkeiten nicht auszuschließen so dass eine tatsächliche Redundanz nicht gegeben ist Das Dokument US 2014/103850 offenbart eine weitere Synchronmaschine nach dem Stand der Technik.

Ferner wird vorgeschlagen, dass die für die beiden Bordnetze vorgesehenen getrennten Statorwicklungen durch separate Wicklungen realisiert werden, die über- oder ineinander gewickelt sind, wobei für jede dieser separaten Wicklungen eine Endstufe mit sechs Leistungsschaltern vorgesehen ist. Durch das Über- oder Ineinanderwickeln kann jedoch ein Kurzschluss aufgrund sich berührender Drähte nicht ausgeschlossen werden, wovon beide Halbmotoren betroffen wären, wodurch deren Verfügbarkeit einschränkt ist. Dabei wird bisher immer vorausgesetzt, dass sich beide Motorhälften möglichst gleich verhalten und daher mittels zwei identisch aufgebauter Endstufen und weitestgehend identischem Regler betreiben lassen. Des Weiteren werden für zukünftige Anwendungen Bordnetze mit höheren Nennspannungen als der üblicherweise verwendeten 12 V bzw. 14 V Nennspannung erdacht, wobei für diese häufig keine Redundanz vorgesehen ist.

JPH0974701A zeigt einen Motor mit zwei Statorwicklungen, wobei sich jeweils beide Wicklungen in jeder der Nuten des Stators befinden. Durch den gezeigten Motor wird der magnetische Streufluss verringert, der durch unterschiedliche Spannungen an den Wicklungen erzeugt wird.

Die Aufgabe der Erfindung besteht somit darin, eine permanenterregte Synchronmaschine und ein Kraftfahrzeugsystem mit verbesserter funktionaler Sicherheit insbesondere bei Verwendung mit nicht redundanten Kraftfahrzeugbordnetzen höherer Nennspannung bereitzustellen.

Diese Aufgabe wird gelöst durch eine permanent erregte Synchronmaschine mit den Merkmalen des Patentanspruchs 1 sowie ein Kraftfahrzeugsystem mit den Merkmalen des Patentanspruchs 7.

Die Erfindung betrifft eine permanenterregte Synchronmaschine, umfassend einen Rotor sowie einen Stator zur Aufnahme wenigstens einer ersten Statorwicklung und einer von dieser ersten Statorwicklung elektrisch isolierten zweiten Statorwicklung, welche sich erfindungsgemäß dadurch auszeichnet, dass die zweite Statorwicklung einen geringeren Leiterquerschnitt und eine größere Wicklungszahl als die erste Statorwicklung aufweist, wobei die erste Statorwicklung für den Motorbetrieb mit einer ersten Betriebsspannung und die zweite Statorwicklung für den Motorbetrieb an einer zweiten Betriebsspannung mit höherer Nennspannung als einer Nennspannung der ersten Betriebsspannung vorgesehen ist.

In vorteilhafter Weise wird somit eine verbesserte funktionale Sicherheit insbesondere bei der Verwendung mit nicht redundant ausgelegten Kraftfahrzeugbordnetzen höherer Nennspannung erreicht. Im Normalbetrieb wird der erfindungsgemäße Synchronmotor bevorzugt mittels beider Bordnetze versorgt, so dass die Synchronmaschine bei Ausfall bzw. Störung eines der beiden Bordnetze mit dem noch intakten Bordnetz betrieben werden kann.

Für die erste und zweite Statorwicklung ist jeweils ein zugeordneter Umrichter zur Ansteuerung derselben vorgesehen, die in bekannter Weise mit sechs Leistungshalbleitern aufgebaut werden kann. Diese Umrichter zur Ansteuerung der Statorwicklungen sind entsprechend nicht identisch aufgebaut, sondern insbesondere bezüglich der Stromtragfähigkeit entsprechend der jeweiligen Spannung angepasst, wobei beispielsweise im Falle der niedrigeren Spannung - in Abhängigkeit des mit dem jeweiligen Halbmotor zu erzeugenden Drehmoments - ein höherer Strom transportiert werden können muss. Die Leistungshalbleiter sind entsprechend auszulegen. Halbmotor ist dementsprechend nicht einschränkend im Sinne von genau hälftig (50%) zu verstehen, da die Aufteilung unter Berücksichtigung beispielsweise zu erfüllender Sicherheitsanforderungen im Falle eines Ausfalls oder einer Störung erfolgen kann.

Gemäß der Erfindung umfasst der Stator der permanenterregten Synchronmaschine eine Vielzahl von durch Nuten getrennte Statorpole zur Aufnahme der wenigstens ersten und zweiten Statorwicklung, wobei die erste Statorwicklung auf einer ersten Gruppe von Statorpolen und die zweite Statorwicklung auf einer zur ersten Gruppe disjunkten Gruppe von Statorpolen angeordnet sind.

Damit weist jeder Statorpol entweder eine Wicklung als erste Statorwicklung oder eine Wicklung als zweite Statorwicklung auf, wodurch die elektrische Isolation und somit Redundanz in einfacher Weise weiter verbessert wird.

Die Anzahl der Statorpole der ersten Gruppe zur Anzahl der Statorpole zur zweiten Gruppe stehen in einem bestimmten Zahlenverhältnis, welches von der Anzahl der Statorpole abhängt. So können bspw. die geradzahlige Anzahl der Statorpole des Stators hälftig geteilt werden, so dass sowohl die erste Gruppe als auch die zweite Gruppe die gleiche Anzahl von Statorpolen umfasst. Auch ein anderes Teilungsverhältnis kann gewählt werden, bspw. 3/4 zu 1/4 bei einem Stator mit 12 Nuten und 8-poligen Rotor oder 2/3 zu 1/3 bei einem Stator mit 9 Nuten und einem 6-poligen Rotor. Damit kann der Synchronmotor an die Leistungsfähigkeit der beiden Bordnetze angepasst werden.

Bevorzugt die erste Statorwicklung von der zweiten Statorwicklung abweichend verschaltet, insbesondere ist die erste Statorwicklung (niedrigerer Nennspannung) in Sternschaltung und die zweite Statorwicklung (höherer Nennspannung) in Dreieckschaltung verschaltet. Dadurch unterscheiden sich die Drahtdurchmesser weniger und auf der Motorseite mit höherer Spannung wird die Windungszahl kleiner und daher Fertigungszeit gespart. Eine vorteilhafte Ausgestaltung der Erfindung sieht vor, dass der Stator mit der ersten und zweiten Statorwicklung derart ausgebildet ist, dass die Statorpole der ersten und zweiten Gruppe jeweils in einer aufeinanderfolgenden Reihe angeordnet sind, vorzugsweise bilden die erste Gruppe von Statorpolen und die zweite Gruppe von Statorpolen jeweils eine Hälfte der Statorpole des Stators.

Eine andere vorteilhafte Ausgestaltung der Erfindung schlägt vor, dass die Statorpole der ersten Gruppe und die Statorpole der zweiten Gruppe alternierend angeordnet sind. Damit wird eine besonders hohe Laufruhe des Synchronmotors bei beiden Betriebsspannungen erreicht.

Schließlich ist es bei einer weiteren vorteilhaften Ausgestaltung der Erfindung vorgesehen, dass zwei oder ein Vielfaches von zwei nebeneinander liegenden Statorpolen der ersten Gruppe und der zweiten Gruppe alternierend angeordnet sind. So nehmen bspw. zwei nebeneinanderliegende Statorpole eine Wicklung der ersten Statorwicklung, die sich daran anschließenden zwei nebeneinanderliegenden Statorpole eine Wicklung der zweiten Statorwicklung usw. auf. Dies führt zu einer symmetrischen Motorauslastung des Synchronmotors bei gleichzeitig geringerer lokaler Sättigung, insbesondere wenn dieser Synchronmotor nur an einer Bordnetzspannung betrieben wird.

Weiterhin betrifft die Erfindung Kraftfahrzeugsystem, welchem wenigstens eine erfindungsgemäße permanenterregte Synchronmaschine zugeordnet ist und das zumindest zwei unabhängige Spannungsversorgungen mit einer ersten und einer zweiten Betriebsspannung aufweist, wobei die erste Betriebsspannung zur Versorgung einer ersten Statorwicklung der permanenterregte Synchronmaschine eine niedrigere Nennspannung aufweist als eine zweite Betriebsspannung zur Versorgung einer zweiten Statorwicklung der permanenterregte Synchronmaschine.

Die Nennspannung der ersten Betriebsspannung ist bevorzugt wenigstens doppelt so hoch, wie die Nennspannung der zweiten Betriebsspannung. Insbesondere beträgt die Nennspannung der ersten Betriebsspannung etwa 48 V und die Nennspannung der zweiten Betriebsspannung etwa 12 V.

Im Folgenden wird die Erfindung unter Bezugnahme auf die beigefügten Figuren näher erläutert und beschrieben. Es zeigen:
Figur 1 ein Prinzipschaltbild einer Ansteuerungsschaltung einer permanenterregten Synchronmaschine mit zwei Bordnetzspannungen unterschiedlicher Nennspannung und geteilten Statorwicklungen,
Figur 2 eine Schnittdarstellung einer permanenterregten Synchronmaschine gemäß der Erfindung,
Figur 3 ein Wickelschema des Stators des Synchronmotors nach Figur 1,
Figur 4 eine Schnittdarstellung einer weiteren permanenterregten Synchronmaschine gemäß der Erfindung,
Figur 5 eine Schnittdarstellung einer weiteren permanenterregten Synchronmaschine gemäß der Erfindung,
Figur 6 eine Schnittdarstellung einer weiteren permanenterregten Synchronmaschine gemäß der Erfindung und
Figur 7 eine Schnittdarstellung einer weiteren permanenterregten Synchronmaschine gemäß der Erfindung.

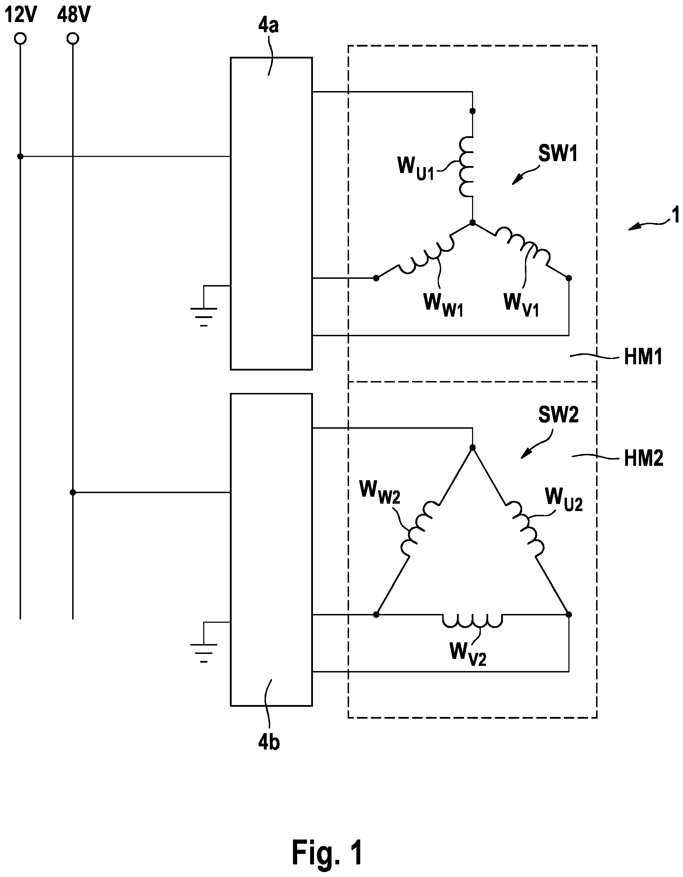

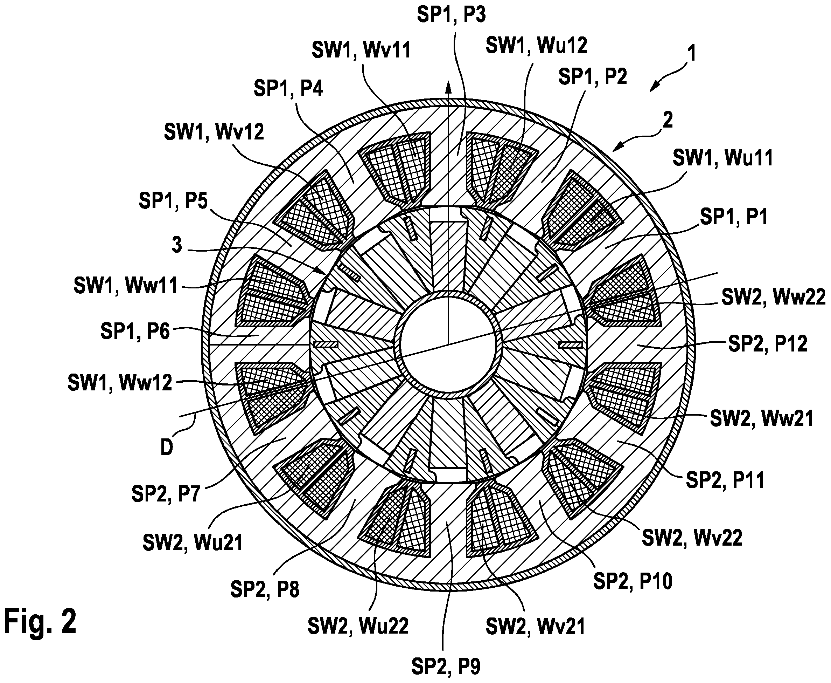

Die Fig. 1 zeigt ein Prinzipschaltbild einer Ansteuerungsschaltung einer permanenterregten Synchronmaschine 1, die mittels zwei getrennter Bordnetze eines Fahrzeugs im Motorbetrieb mit Energie versorgt wird, bspw. an ein Bordnetz mit einer Nennspannung von 12 V und an ein weiteres Bordnetz mit einer Nennspannung von 48 V. Die Ansteuerung erfolgt beispielsgemäß durch die Umrichter 4a und 4b, welchen die Ansteuersignale durch wenigstens eine nicht dargestellte Kontrolleinheit bereitgestellt werden. Die Statorwicklung der permanenterregten Synchronmaschine 1 ist in eine erste Statorwicklung SW1 und in eine zweite Statorwicklung SW2 geteilt, wodurch ein erster Halbmotor HM1 und ein zweiter Halbmotor HM2 gebildet werden, welche beide zur Erzeugung eines Drehmoments an Rotor 2 (Fig. 2) der Synchronmaschine ausgestaltet sind. Die Statorwicklung SW1 ist in Sternschaltung verschaltet und die Statorwicklung SW2 in Dreieckschaltung. Beide Statorwicklungen SW1 und SW2 der Halbmotoren HM1 und HM2 können auch in Dreieckschaltung oder beide in Sternschaltung verschaltet werden. Jeder der U-, V- und W-Anschlüsse des Halbmotors HM1 und des HM2 sind jeweils mit einer aus zwei Leistungshalbleiterschaltern aufgebauten Halbbrücke (nicht dargestellt) der Umrichter 4a bzw. 4b verbunden, so dass jeder Halbmotor HM1 und HM2 von 6 Leistungshalbleitern angesteuert wird.

Die Statorwicklung SW2 für die höhere Bordnetzspannung ist im Drahtquerschnitt im Vergleich zu der Statorwicklung SW1 niedrigerer Bordnetzspannung reduziert. Der Füllfaktor der Statorwicklungen ist für beide Halbmotoren HM1 und HM2 im Wesentlichen gleich. Die Motorregelung wird für die beiden Halbmotoren HM1 und HM2 unabhängig mit jeweils angepassten Solldrehmomenten durchgeführt.

In Figur 2 ist eine Schnittdarstellung der permanenterregten Synchronmaschine 1 abgebildet. Diese umfasst einen Stator 2 mit durch Nuten getrennte 12 Statorpole P1 bis P12 sowie einen 10-poligen Rotor 2. Die geteilte Statorwicklung des Stators 2 in die auf einer ersten Gruppe SP1 von Statorpolen P1 bis P6 angeordnete erste Statorwicklung SW1 mit den Wicklungen Wu11, Wu12, Wv11, Wv12, Ww11, Ww12 und die auf einer zweiten zur ersten Gruppe disjunkten Gruppe SP2 von Statorpolen P7 bis P12 angeordnete zweite Statorwicklung SW2 mit den Wicklungen Wu21, Wu22, Wv21, Wv22, Ww21, Ww22. Auf jeder dieser Statorpole P1 bis P12 ist jeweils nur eine Wicklung der ersten Statorwicklung SW1 oder der zweiten Statorwicklung SW2 angeordnet. Die erste Gruppe SP1 der Statorpole P1 bis P6 sowie die zweite Gruppe SP2 der Statorpole P7 bis P12 sind jeweils in einer Reihe aufeinanderfolgend angeordnet, so dass der Stator 2 durch die erste und zweite Gruppe SP1 und SP2 der Statorpole hälftig geteilt wird, wie dies in Figur 2 mit der Linie D dargestellt ist. Somit wird durch jeder dieser Gruppen SP1 und SP2 von Statorpolen zusammen mit den jeweiligen Wicklungen der ersten Statorwicklung SW1 bzw. SW2 der erste Halbmotor HM1 und der zweite Halbmotore HM2 gebildet.

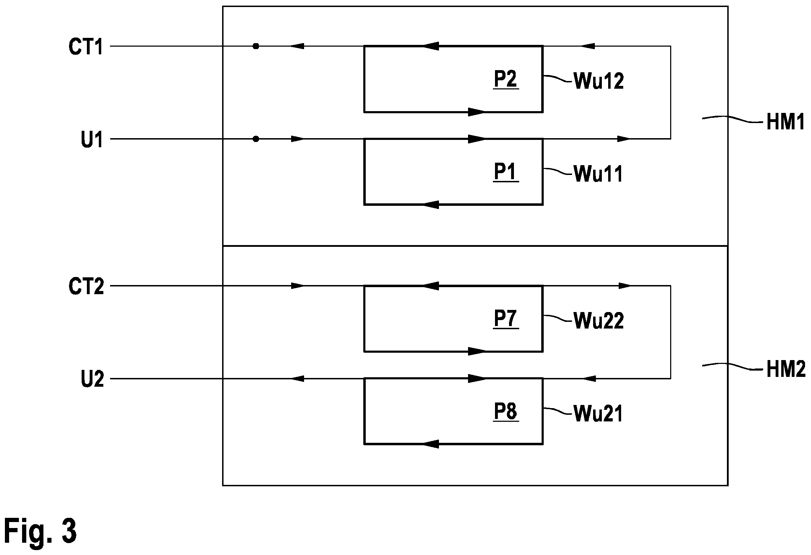

Die zu jedem Halbmotor HM1 und HM2 gehörenden Statorwicklungen Wu11, Wu12, Wv11, Wv12, Ww11, Ww12 und Wu21, Wu22, Wv21, Wv22, Ww21, Ww22 werden an das 12V-Bordnetz bzw. an das 48V-Bordnetz mittels des jeweiligen Umrichters 4a oder 4b angeschlossen. Das zugehörige Wickelschema des Stators 2 zeigt Figur 3 für die Phase U des Halbmotors HM1 und des Halbmotors HM2.

Nach dieser Figur 3 wird die Wicklung Wu11 des Statorpoles P1 und die Wicklung Wu12 des Statorpoles P2 der Phase U mit jeweils 10 Windungen realisiert, wobei die Wicklung Wu11 an die Bordnetzspannung U1 des 12V-Bordnetz und die Wicklung Wu12 auf einem Sternpunkt CT1 des 12V-Bordnetzes geführt ist. Entsprechend sind für den Halbmotor HM1 auch die Wicklungen Wv11 und Wv12 für die Phase V und die Wicklungen Ww11 und Ww12 für die Phase W gewickelt und verschaltet.

Da der Halbmotor HM2 an dem 48V-Bordnetz betrieben wird, weisen die Wicklungen Wu21 und Wu22 jeweils 40 Windungen auf. Die Wicklung Wu21 ist auf den Statorpol P7 gewickelt und im Falle einer Sternschaltung mit einem Sternpunkt CT2 des 48V-Bordnetz verbunden. Die Wicklung Wu22 ist auf den direkt darauffolgenden Statorpol P8 gewickelt und an die Bordnetzspannung U2 des 48V-Bordnetzes angeschlossen. Entsprechend sind für den Halbmotor HM2 auch die Wicklungen Wv21 und Wv22 für die Phase V und die Wicklungen Ww21 und Ww22 für die Phase W gewickelt und verschaltet.

Eine hälftige Aufteilung der Statorpole bei einem 12-nutigen Stator 2 ist auch bei einem 8-poligen Rotor 3 möglich. So wird eine erste Statorwicklung SW1 mit den Wicklungen Wu11, Wv11, Ww11, Wu12, Wv12 und Ww12 auf die Statorpole P1 bis P6 in der angeführten Reihenfolge gewickelt und eine zweite Statorwicklung SW2 mit den Wicklungen Wu21, Wv21, Ww21, Wu22, Wv22 und Ww22 auf einer zweiten zur ersten Gruppe disjunkten Gruppe von Statorpolen P7 bis P12 in der aufgeführten Reihenfolge angeordnet.

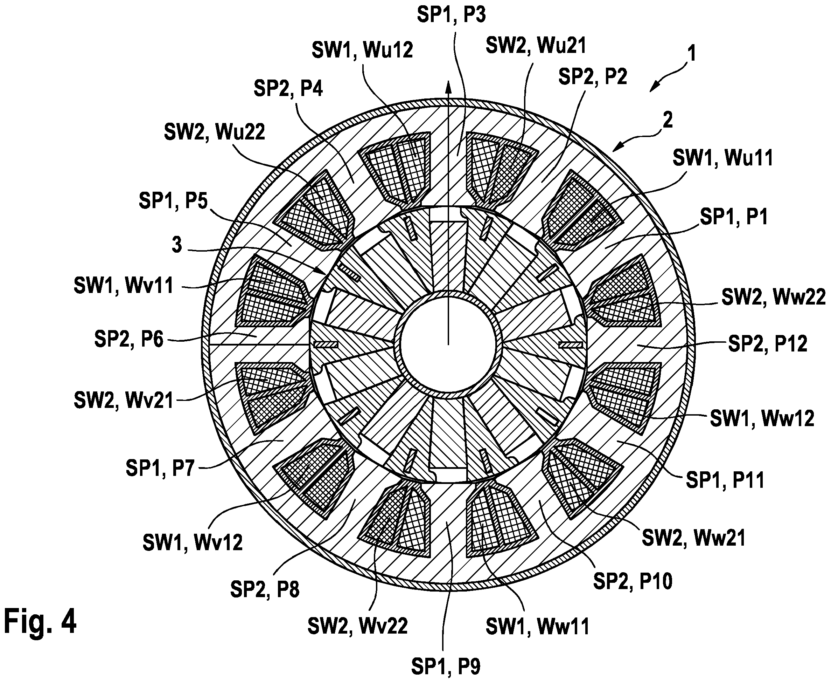

Die Figur 4 zeigt eine permanenterregte Synchronmaschine 1 mit einem Stator 2 und einem Rotor 3, wobei entsprechend des Synchronmotors 1 nach Figur 2 der Stator 2 12 Statorpole P1 bis P12 und der Rotor 3 mit 10 Magnetpolen ausgebildet ist. Jedoch ist der Synchronmotor 1 nach Figur 2 durch die erste und zweite Statorwicklung nicht in zwei Hälften geteilt.

Nach Figur 4 sind die die Wicklungen Wu11, Wu12, Wv11, Wv12, Ww11, Ww12 der an das 12V-Bordnetz angeschlossenen ersten Statorwicklung SW1 und der an das 48V-Bordnetz angeschlossenen Wicklungen Wu21, Wu22, Wv21, Wv22, Ww21, Ww22 der zweiten Statorwicklung SW2 abwechselnd auf die Statorpole P1 bis P12 gewickelt. So ist die Wicklung Wu11 auf dem Statorpol P1, die Wicklung Wu21 auf dem Statorpol P2, die Wicklung Wu12 auf dem Statorpol P3, die Wicklung Wu22 auf dem Statorpol P4, die Wicklung Wv11 auf dem Statorpol P5, die Wicklung Wv21 auf dem Statorpol P6, die Wicklung Wv12 auf dem Statorpol P7 usw. angeordnet. Damit bilden die Statorpole P1, P3, P5 usw. eine erste Gruppe SP1 von Statorpolen und die Statorpole P2, P4, P6 usw. die hierzu disjunkte zweite Gruppe SP2 von Statorpolen.

Auch bei dieser Ausführung einer permanenterregten Synchronmaschine 1 sind die Wicklungen Wu11, Wu12, Wv11, Wv12, Ww11, Ww12 der ersten Statorwicklung SW1 als auch die Wicklungen Wu21, Wu22, Wv21, Wv22, Ww21, Ww22 der zweiten Statorwicklung SW2 sternförmig geschaltet und über jeweils einen Umrichter 4a, 4b aus 6 Leistungshalbleitern an das 12V-Bordnetz bzw. an das 48V-Bordnetz angeschlossen. Anstelle einer sternförmigen Verschaltung ist auch eine Dreieckschaltung möglich.

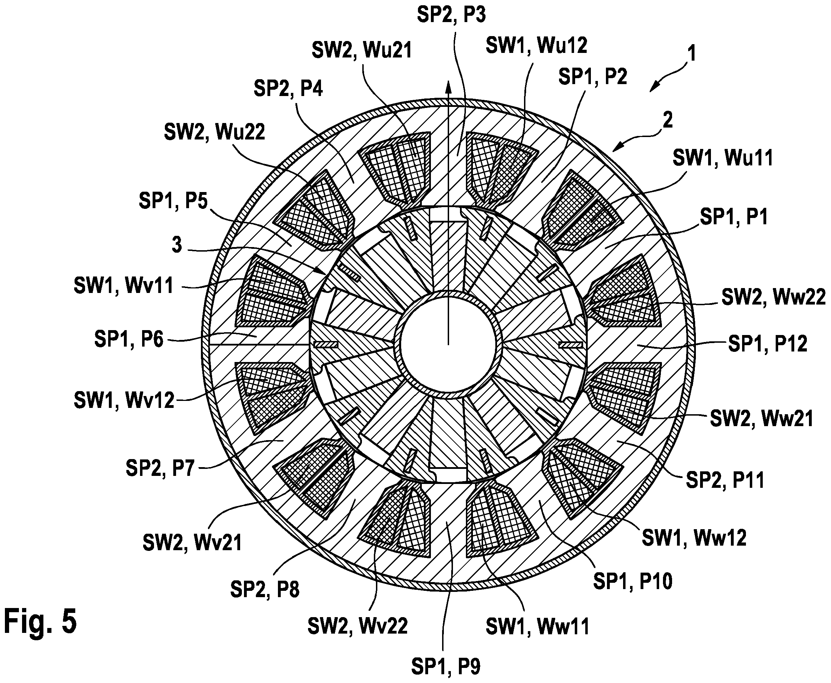

Auch die Statorwicklung der permanenterregten Synchronmaschine 1 nach Figur 5 ist nicht so geteilt, dass der Stator 2 durch die erste und zweite Statorwicklung in zwei Hälften geteilt wird. Hier erfolgt die Aufteilung der Statorwicklung derart, dass zwei Wicklungen Wu11, Wu12, Wv11, Wv12, Ww11, Ww12 der ersten Statorwicklung SW1 mit zwei Wicklungen Wu21, Wu22, Wv21, Wv22, Ww21, Ww22 der zweiten Statorwicklung SW2 abwechseln. So sind gemäß Figur 5 auf den benachbarten Statorpolen P1 und P2 die Wicklungen Wu11 und Wu12 der ersten Statorwicklung SW1, auf den sich daran anschließenden Statorpolen P3 und P4 die Wicklungen Wu21, Wu22 der zweiten Statorwicklung SW2, auf den sich daran anschließenden Statorpolen P5 und P6 wieder Wicklungen Wv11, Wv12 der ersten Statorwicklung SW1 usw. Damit bilden die Statorpole P1, P2, P5, P6 usw. eine erste Gruppe SP1 von Statorpolen und die Statorpole P3, P4, P7, P8 usw. die hierzu disjunkte zweite Gruppe SP2 der Statorpole.

Bei dieser Ausführung sind die Wicklungen Wu11, Wu12, Wv11, Wv12, Ww11, Ww12 der ersten Statorwicklung SW1 ebenso sternförmig geschaltet und über Umrichter 4a mit 6 Leistungsschaltern mit dem 12V-Bordnetz verbunden. Auch die Wicklungen Wu21, Wu22, Wv21, Wv22, Ww21, Ww22 der zweiten Statorwicklung SW2 sind sternförmig verschaltet und über einen weiteren Umrichter 4b mit 6 Leistungsschaltern mit dem 48V-Bordnetz verbunden. Alternativ ist jeweils auch eine Dreieckschaltung möglich.

Der Vorteil einer nach Figur 5 ausgeführten Synchronmaschine ist eine symmetrische Motorauslastung, eine geringere lokale Sättigung, wenn eines der beiden Bordnetze oder einer der beiden Endstufen ausfällt.

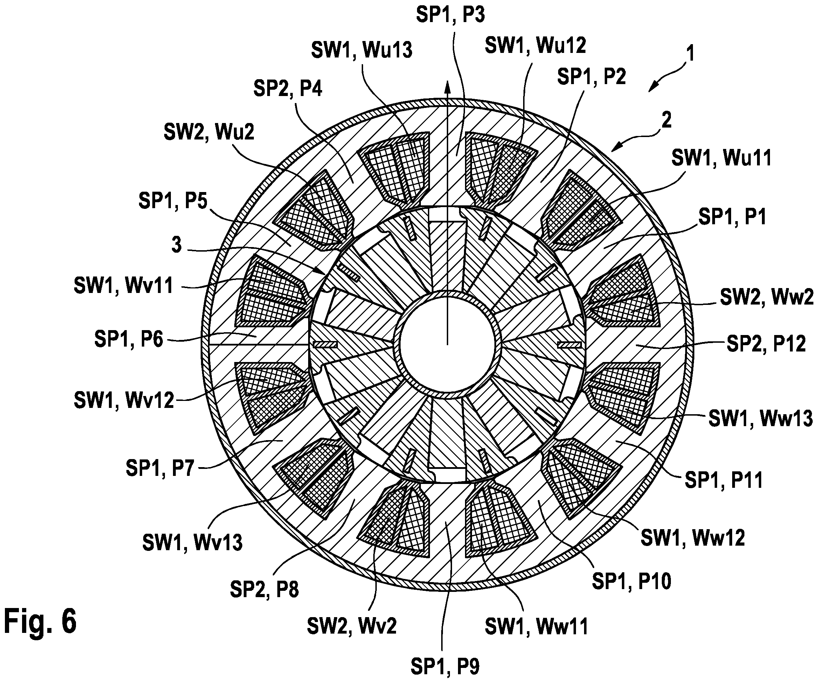

Die Teilung der Statorwicklung des Stators 2 wurde bei den Synchronmotoren gemäß den Figuren 2, 4 und 5 symmetrisch vorgenommen. Es ist auch möglich - wie in Figur 6 dargestellt - eine asymmetrische Aufteilung zu realisieren. So kann der Stator 2 nach Figur 6 mit seinen 12 Statorpolen P1 bis P12 und einem 10-poligen Rotor 3 aufgrund seiner 4-fachen Symmetrie im Verhältnis 3/4 zu 1/4 geteilt werden. Eine erste Statorwicklung SW1 mit Wicklungen Wu11, Wu12, Wul3, Wv11, Wv12, Wv13, Ww11, Ww12, und Ww13 ist an das 48V-Bordnetz angeschlossen; eine zweite Statorwicklung SW2 mit Wicklungen Wu2, Wv2, und Ww2 ist an das 12V-Bordnetz angeschlossen.

Aus Figur 6 ist die Aufteilung auf die 12 Statorpole P1 bis P12 ersichtlich. So trägt der Statorpol P1, P2 bzw. P3 die Wicklung Wu11, Wu12 bzw. Wu13 der ersten Statorwicklung SW1, der Statorpol P4 die Wicklung Wu2 der zweiten Statorwicklung SW2, der Statorpol P5, P6 bzw. P7 die Statorwicklung Wv11, Wv12 bzw. Wv13 der ersten Statorwicklung SW1, der Statorpol P8 wieder die Statorwicklung Wv2 der zweiten Statorwicklung SW2 usw. Somit bilden die Statorpole P1, P2, P3, P5, P6, P7, P9, P10 und P11 eine erste Gruppe SP1 von Statorpolen und die Statorpole P4, P8 und P12 die hierzu disjunkte zweite Gruppe SP2 von Statorpolen.

Auch bei dieser Ausführung eines erfindungsgemäßen Synchronmotors 1 sind die Wicklungen Wu11, Wu12, Wul3, Wv11, Wv12, Wv13, Ww11, Ww12, und Ww13 der ersten Statorwicklung SW1 sternförmig, in gleicher Weise auch die drei Wicklungen Wu2, Wv2, und Ww der zweiten Statorwicklung SW2 und werden jeweils von einem zugeordneten Umrichter 4a,4b aus 6 Leistungshableitern angesteuert . Auch können die beiden Statorwicklungen SW1 und SW2 dreieckförmig verschaltet werden oder auch in unterschiedlicher Weise, so dass eine Statorwicklung sternförmig und die andere Statorwicklung dreieckförmig verschaltet ist.

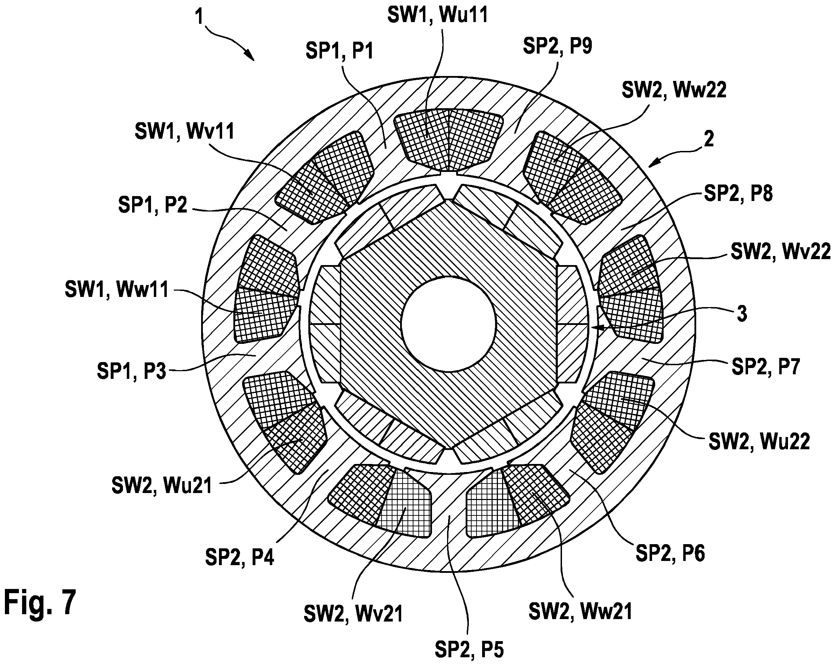

Eine Aufteilung des 12-nutigen Stators 2 im Verhältnis 3/4 zu 1/4 ist auch bei einem 8-poligen Rotor 3 möglich. So wird eine erste Statorwicklung SW1 mit den Wicklungen Wu11, Wv11 und Ww11 auf die aufeinanderfolgenden Statorpole P1 bis P3 in der angeführten Reihenfolge gewickelt und eine zweite Statorwicklung SW2 mit den Wicklungen Wu21, Wv21, Ww21, Wu22, Wv22, Ww22, Wu23, Wv23 und Ww23 einer zweiten zur ersten Gruppe disjunkten Gruppe von Statorpolen P4 bis P12 in der aufgeführten Reihenfolge angeordnet. Bei der permanenterregten Synchronmaschine 1 gemäß Figur 7 ist ebenso eine asymmetrische Aufteilung der Statorpole auf eine erste Statorwicklung SW1 und zweite Statorwicklung SW im Verhältnis von 1/3 zu 2/3 vorgenommen. Diese Synchronmotor 1 besteht aus einem 6-poligen Rotor 3 und einem Stator mit 9 Nuten. So wird eine erste Statorwicklung SW1 mit den Wicklungen Wu11, Wv11 und Ww11 auf die aufeinanderfolgenden Statorpole P1, P2 und P3 in der aufgeführten Reihenfolge gewickelt, die eine erste Gruppe SP1 von Statorpolen bilden. Eine zweite Statorwicklung SW2 mit den Wicklungen Wu21, Wv21, Ww21, Wu22, Wv22 und Ww22 ist auf die aufeinanderfolgenden Statorpole P3 bis P12 gewickelt, die eine zweite Startergruppe SP2 bildet.
Für die Verschaltung der beiden Statorwicklungen SW1 und SW2 stehen verschiedene Möglichkeiten zur Verfügung.

So kann die erste Statorwicklung SW1 mit den Wicklungen Wu11, Wv11 und Ww11 sternförmig oder dreieckförmig verschaltet werden. Für die zweite Statorwicklung SW2 wird eine Sternschaltung verwendet, wobei die Wicklungen einer Phase, also die Wicklungen Wu21 und Wv21, die Wicklungen Ww21 und Wu22 sowie die Wicklungen Wv22 und Ww22 in Reihe oder parallel geschaltet sind.

### Bezugszeichen

- 1: Bürstenloser Gleichstrommotor
- 2: Stator des Gleichstrommotors 1
- 3: Rotor des Gleichstrommotors 1
- 4a,4b: Umrichter zur Ansteuerung von Gleichstrommotor 1

- CT1: Sternpunkt eines 12V-Bordnetzes
- CT2: Sternpunkt eines 48V-Bordnetzes

- D: Teilungslinie des Stators 2

- HM1: erster Halbmotor des Gleichstrommotors 1
- HM2: zweiter Halbmotor des Gleichstrommotors 1

- Pi: Statorpole des Stators 2, i= 1, ... 12

- SP1: erste Gruppe von Statorpolen
- SP2: zweite Gruppe von Statorpolen

- SW1: erste Statorwicklung
- SW2: zweite Statorwicklung

- U1: Bordnetzspannung eines 12V-Bordnetzes
- U2: Bordnetzspannung eines 48V-Bordnetzes

- Wuij: j-te Wicklung der Phase U der i-ten Statorwicklung
- Wvij: j-te Wicklung der Phase V der i-ten Statorwicklung
- Wwij: j-te Wicklung der Phase W der i-ten Statorwicklung

## Patentansprüche

1. Permanenterregte Synchronmaschine (1), umfassend einen Rotor (3) sowie einen Stator (2) zur Aufnahme wenigstens einer ersten Statorwicklung (SW1) und einer von dieser ersten Statorwicklung (SW1) elektrisch isolierten zweiten Statorwicklung (SW2), wobei die erste Statorwicklung (SW1) für den Motorbetrieb mit einer ersten Betriebsspannung (U1) und die zweite Statorwicklung (SW2) für den Motorbetrieb an einer zweiten Betriebsspannung (U2), mit höherer Nennspannung als einer Nennspannung der ersten Betriebsspannung (U1), vorgesehen ist, **dadurch gekennzeichnet, dass** die zweite Statorwicklung (SW2) einen geringeren Leiterguerschnitt und eine größere Wicklungszahl als die erste Statorwicklung (SW1) aufweist und der Stator (2) eine Vielzahl von durch Nuten getrennte Statorpole (P1, P2, ... P12) zur Aufnahme der wenigstens ersten und zweiten Statorwicklung aufweist, wobei die erste Statorwicklung (SW1) auf einer ersten Gruppe (SP1) von Statorpolen und die zweite Statorwicklung (SW2) auf einer zur ersten Gruppe (SP1) disjunkten Gruppe (SP2) von Statorpolen angeordnet sind.

2. Permanenterregte Synchronmaschine (1) gemäß Anspruch 1, **dadurch gekennzeichnet, dass** die erste Statorwicklung (SW1) von der zweiten Statorwicklung (SW2) abweichend verschaltet, insbesondere ist die erste Statorwicklung (SW1) in Sternschaltung und die zweite Statorwicklung (SW2) in Dreieckschaltung verschaltet.

3. Permanenterregte Synchronmaschine (1) nach einem der vorhergehenden Ansprüche,
**dadurch gekennzeichnet, dass** der Stator (2) mit der ersten und zweiten Statorwicklung (SW1, SW2) derart ausgebildet ist, dass die Statorpole der ersten und zweiten Gruppe jeweils in einer aufeinanderfolgenden Reihe angeordnet sind.

4. Permanenterregte Synchronmaschine (1) nach einem der vorhergehenden Ansprüche, **dadurch gekennzeichnet, dass** die erste Gruppe (SP1) von Statorpolen (P1, ... P6) und die zweite Gruppe (SP2) von Statorpolen (P7, ... P12) jeweils eine Hälfte der Statorpole (P1, P2, ... P12) des Stators (2) bilden.

5. Permanenterregte Synchronmaschine (1) nach einem der vorhergehenden Ansprüche, **dadurch gekennzeichnet, dass** die Statorpole (P1, P3, P5, ...) der ersten Gruppe (SP1) und die Statorpole (P2, P4, P6, ...) der zweiten Gruppe (SP2) alternierend angeordnet sind.

6. Permanenterregte Synchronmaschine (1) nach einem der vorhergehenden Ansprüche, **dadurch gekennzeichnet, dass** zwei oder ein Vielfaches von zwei nebeneinander liegenden Statorpolen der ersten Gruppe (SP1) und der zweiten Gruppe (SP2) alternierend angeordnet sind.

7. Kraftfahrzeugsystem, welchem wenigstens eine permanenterregte Synchronmaschine gemäß einem der Ansprüche 1 bis 6 zugeordnet ist und das zumindest zwei unabhängige Spannungsversorgungen mit einer ersten und einer zweiten Betriebsspannung (U1,U2) aufweist, wobei die erste Betriebsspannung (U1) zur Versorgung einer ersten Statorwicklung (SW1) der permanenterregten Synchronmaschine eine niedrigere Nennspannung aufweist als eine zweite Betriebsspannung (U2) zur Versorgung einer zweiten Statorwicklung (SW2) der permanenterregten Synchronmaschine.

## Claims

1. Permanent-magnet synchronous machine (1), comprising a rotor (3) and a stator (2) for holding at least one first stator winding (SW1) and a second stator winding (SW2) which is electrically insulated from said first stator winding (SW1), wherein the first stator winding (SW1) is provided for motor operation with a first operating voltage (U1), and the second stator winding (SW2) is provided for motor operation at a second operating voltage (U2) with a higher rated voltage than a rated voltage of the first operating voltage (U1), **characterized in that** the second stator winding (SW2) has a smaller conductor cross-section and a larger number of turns than the first stator winding (SW1), and the stator (2) comprises a plurality of stator poles (P1, P2, ... P12), separated by slots, for the accommodation of the at least first and second stator windings, wherein the first stator winding (SW1) is arranged on a first group (SP1) of stator poles, and the second stator winding (SW2) is arranged on a group (SP2) of stator poles which is separate from the first group (SP1).

2. Permanent-magnet synchronous machine (1) according to Claim 1, **characterized in that** the connection of the first stator winding (SW1) differs from that of the second stator winding (SW2), specifically **in that** the first stator winding (SW1) is star-connected and the second stator winding (SW2) is delta-connected.

3. Permanent-magnet synchronous machine (1) according to either of the preceding claims, **characterized in that** the stator (2) with its first and second stator windings (SW1, SW2) is configured such that the stator poles of the first and second group are respectively arranged in a consecutive sequence.

4. Permanent-magnet synchronous machine (1) according to one of the preceding claims, **characterized in that** the first group (SP1) of stator poles (P1, ... P6) and the second group (SP2) of stator poles (P7, ... P12) respectively constitute one half of the stator poles (P1, P2, ... P12) of the stator (2).

5. Permanent-magnet synchronous machine (1) according to one of the preceding claims, **characterized in that** the stator poles (P1, P3, P5, ...) of the first group (SP1) and the stator poles (P2, P4, P6, ...) of the second group (SP2) are arranged in an alternating manner.

6. Permanent-magnet synchronous machine (1) according to one of the preceding claims, **characterized in that** two, or a multiple of two adjoining stator poles in the first group (SP1) and the second group (SP2) are arranged in an alternating manner.

7. Motor vehicle system, to which at least one permanent-magnet synchronous machine according to one of Claims 1 to 6 is assigned, and having at least two independent voltage supplies with a first and second operating voltage (U1, U2), wherein the first operating voltage (U1) for the supply of a first stator winding (SW1) of the permanent-magnet synchronous machine has a lower rated voltage than a second operating voltage (U2) for the supply of a second stator winding (SW2) of the permanent-magnet synchronous machine.

## Revendications

1. Machine synchrone à excitation permanente (1), comprenant un rotor (3) ainsi qu'un stator (2) destiné à recevoir au moins un premier enroulement de stator (SW1) et un second enroulement de stator (SW2) électriquement isolé de ce premier enroulement de stator (SW1), dans laquelle le premier enroulement de stator (SW1) est prévu pour le fonctionnement du moteur avec une première tension de fonctionnement (U1) et le second enroulement de stator (SW2) est prévu pour le fonctionnement du moteur à une seconde tension de fonctionnement (U2), avec une tension nominale plus élevée qu'une tension nominale de la première tension de fonctionnement (U1), **caractérisée en ce que** le second enroulement de stator (SW2) présente une plus petite section transversale de conducteur et un plus grand nombre de spires que le premier enroulement de stator (SW1) et le stator (2) présente une multiplicité de pôles de stator (P1, P2, ..., P12) séparés par des encoches et destinés à recevoir lesdits au moins un premier et second enroulements de stator, dans laquelle le premier enroulement de stator (SW1) est disposé sur un premier groupe (SP1) de pôles de stator et le second enroulement de stator (SW2) est disposé sur un groupe (SP2) de pôles de stator disjoint du premier groupe (SP1).

2. Machine synchrone à excitation permanente (1) selon la revendication 1, **caractérisée en ce que** le premier enroulement de stator (SW1) est connecté différemment du second enroulement de stator (SW2), en particulier le premier enroulement de stator (SW1) est connecté en étoile et le second enroulement de stator (SW2) est connecté en triangle.

3. Machine synchrone à excitation permanente (1) selon l'une quelconque des revendications précédentes, **caractérisée en ce que** le stator (2) avec le premier et le second enroulements de stator (SW1, SW2) est réalisé de telle manière que les pôles de stator du premier et du second groupes soient respectivement disposés en une rangée successive.

4. Machine synchrone à excitation permanente (1) selon l'une quelconque des revendications précédentes, **caractérisée en ce que** le premier groupe (SP1) de pôles de stator (P1, ..., P6) et le second groupe (SP2) de pôles de stator (P7, ..., P12) forment respectivement une moitié des pôles de stator (P1, P2, ..., P12) des pôles du stator (2).

5. Machine synchrone à excitation permanente (1) selon l'une quelconque des revendications précédentes, **caractérisée en ce que** les pôles de stator (P1, P3, P5, ...) du premier groupe (SP1) et les pôles de stator (P2, P4, P6, ...) du second groupe (SP2) sont disposés en alternance.

6. Machine synchrone à excitation permanente (1) selon l'une quelconque des revendications précédentes, **caractérisée en ce que** deux ou un multiple de deux pôles de stator juxtaposés du premier groupe (SP1) et du second groupe (SP2) sont disposés en alternance.

7. Système pour véhicule automobile, auquel au moins une machine synchrone à excitation permanente selon l'une quelconque des revendications 1 à 6 est associée et qui présente au moins deux alimentations de tension indépendantes avec une première et une seconde tensions de fonctionnement (Ul, U2), dans lequel la première tension de fonctionnement (U1) présente pour l'alimentation d'un premier enroulement de stator (SW1) de la machine synchrone à excitation permanente une tension nominale moins élevée qu'une seconde tension de fonctionnement (U2) destinée à l'alimentation d'un second enroulement de stator (SW2) de la machine synchrone à excitation permanente.
